(19) Europäisches Patentamt
European Patent Office
Office européen des brevets

(11) **EP 2 464 862 B1**

(12) **EUROPÄISCHE PATENTSCHRIFT**

(45) Veröffentlichungstag und Bekanntmachung des Hinweises auf die Patenterteilung:
**29.03.2017   Patentblatt 2017/13**

(21) Anmeldenummer: **10743045.6**

(22) Anmeldetag: **12.08.2010**

(51) Int Cl.:
***F03D 7/02*** *(2006.01)*

(86) Internationale Anmeldenummer:
**PCT/EP2010/004931**

(87) Internationale Veröffentlichungsnummer:
**WO 2011/018222 (17.02.2011 Gazette 2011/07)**

(54) **WINDENERGIEANLAGE MIT EINSTELLBARER LEISTUNGSRESERVE**

WIND TURBINE HAVING AN ADJUSTABLE POWER RESERVE

ÉOLIENNE AVEC UNE RÉSERVE DE PUISSANCE AJUSTABLE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.08.2009   DE 102009037239**

(43) Veröffentlichungstag der Anmeldung:
**20.06.2012   Patentblatt 2012/25**

(73) Patentinhaber: **Senvion GmbH**
**22297 Hamburg (DE)**

(72) Erfinder: **KRÜGER, Thomas**
**24784 Westerrönfeld (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(56) Entgegenhaltungen:
EP-A2- 1 672 779     EP-A2- 2 009 282
EP-A2- 2 020 506     EP-A2- 2 028 368
WO-A1-2005/025026    WO-A1-2009/024833
WO-A2-2010/000648    US-A1- 2007 090 651

• ZBIGNIEW LUBOSNY ET AL: "Supervisory Control of a Wind Farm", IEEE TRANSACTIONS ON POWER SYSTEMS, IEEE SERVICE CENTER, PISCATAWAY, NJ, US, Bd. 22, Nr. 3, 1. August 2007 (2007-08-01) , Seiten 985-994, XP011189262, ISSN: 0885-8950, DOI: DOI:10.1109/TPWRS.2007.901101

• PRILLWITZ F ET AL: "Primärregelung mit Windkraftanlagen", ETG-WORKSHOP NEUE DEZENTRALE VERSORGUNGSSTRUKTUREN, 19.-20.02.2003, FRANKFURT/M,, [Online] 19. Februar 2003 (2003-02-19), Seiten 1-6, XP002473463, Gefunden im Internet: URL:www.e-technik.uni-rostock.de/ee/downlo ad/publications_EEV/uni_hro_pub l33_etg_frankfurt_2003.pdf> [gefunden am 2010-02-08] in der Anmeldung erwähnt

**Beschreibung**

Die Erfindung betrifft eine Windenergieanlage mit einem von einem Rotor angetriebenen Generator zur Erzeugung elektrischer Leistung. Genauer gesagt betrifft sie eine Windenergieanlage mit einem Rotor, dessen Blätter pitchverstellbar sind und deren Pitchwinkel von einer Steuerung der Windenergieanlage kontrolliert wird. Dabei bestimmt die Steuerung in Abhängigkeit von einem Betriebspunkt der Windenergieanlage und einem angelegten Eingangssignal für eine vorzuhaltende Leistungsreserve den einzustellenden Pitchwinkel.

Mit steigender Verbreitung von Windenergieanlagen werden sie in zunehmendem Umfang auch zur Regelung und Sicherung des Energieübertragungsnetzes herangezogen. Das Aufgabenspektrum der Windenergieanlagen beschränkt sich daher nicht mehr nur auf die reine Erzeugung elektrischer Energie, sondern wird erweitert um das Bereitstellen von sogenannten Systemdienstleistungen, welche die Netzbetreiber zur Aufrechterhaltung eines stabilen Netzbetriebs benötigen. Zu diesen Systemdienstleistungen gehört neben der Einspeisung von Blindleistung auch das Bereitstellen von einer Wirkleistungsreserve (sogenannte Regelreserve). Übersteigt in einem Netz die Leistungsentnahme die Leistungsproduktion, so sinkt die Netzfrequenz ab; umgekehrt steigt die Netzfrequenz an, wenn die eingespeiste Leistung die entnommene Leistung übersteigt. Da solche Frequenzänderungen unerwünscht sind, wird bei ihrem Auftreten durch Einspeisung zusätzlicher Leistung (bei Unterfrequenz) oder Zurückfahren der eingespeisten Leistung (bei Überfrequenz) reagiert. Um hier auch kurzfristig schnell reagieren zu können, müssen entsprechende Kraftwerkskapazitäten ständig bereitgehalten werden (sogenannte Sekundenreserve). Dies wird ergänzt durch Kraftwerkskapazitäten, die bei Bedarf schnell hochgefahren werden können (sogenannte Minutenreserve). Errichtung und Betrieb (insbesondere im Bereich der Sekundenreserve) dieser Kraftwerke sind recht teuer. Gerade bei Netzen, an denen außer konventionellen Kraftwerken auch verhältnismäßig viele Windenergieanlagen Leistung einspeisen, entsteht daher das Bedürfnis auch die Windenergieanlagen zur Bereitstellung der Regelreserve heranzuziehen. Eine besondere Schwierigkeit liegt dabei hierin, dass Windenergieanlagen zwar ihre Leistungsabgabe verringern können (DE 100 22 974 A1), aber - anders als konventionelle Kraftwerke - nicht einfach in ihrer Leistung hochgefahren werden können, da die maximal verfügbare Leistung durch den verfügbaren Wind beschränkt und damit stochastisch schwankend ist.

Um dennoch Windenergieanlagen auch zur Bereitstellung von Regelleistung heranziehen zu können, sind im Stand der Technik verschiedene Ansätze bekannt geworden. Bei einem verbreiteten Ansatz macht man es sich zu Nutze, dass Windenergieanlagen üblicherweise zu Windparks zusammengefasst sind. Hier betreibt man eine Windenergieanlage (Referenzanlage) mit der vollen, durch die jeweiligen Windverhältnisse gegebenen Leistung und nimmt die von ihr erzeugte elektrische Leistung als Referenz für andere Windenergieanlagen des Parks. Je nach der gewünschten Leistungsreserve werden diese anderen Anlagen dann gedrosselt betrieben, so dass durch Aufhebung der Drosselung bei Bedarf schnell zusätzliche Leistung mobilisiert werden kann. Dieses recht einfache Konzept funktioniert grundsätzlich, hat jedoch den Nachteil, dass Abweichungen der maximalen Leistungsfähigkeit zwischen den einzelnen Windenergieanlagen des Windparks von den an der Referenzanlage vorgefundenen Verhältnissen nicht berücksichtigt werden. Es ist daher nicht sichergestellt, sondern eher vom Zufall abhängig, dass die angestrebte Regelleistung auch tatsächlich zur Verfügung steht.

Weiter ist es bekannt, mittels eines Anemometers die tatsächlich herrschende Windgeschwindigkeit zu messen und anhand einer für die jeweilige Windenergieanlage ermittelten Kennlinie die bei diesem Wind verfügbare Leistung zu ermitteln (DE 10 2007 036 446 A1). Dieser Wert stellt die verfügbare Leistung dar, von der ein gewisser Betrag als in Reserve zu haltende Leistung (Regelleistung) abgezogen wird. Der sich dann ergebende Wert wird als modifizierter Leistungssollwert von der Betriebssteuerung der Windenergieanlage eingestellt. Das Verfahren kann als Vorteil eine hohe Transparenz für sich buchen, weist jedoch den Nachteil auf, dass Fehler bei der Messung der Windgeschwindigkeit voll auf das Ergebnis durchschlagen. Dies wiegt insbesondere deshalb schwer, weil die Messung der Windgeschwindigkeit an der Windenergieanlage mittels einem auf der Gondel angeordneten Anemometer bekanntermaßen ungenau ist. Deswegen kann es zu Instabilitäten kommen, insbesondere wenn sich über einen längeren Zeitraum die Abweichungen akkumulieren. Dies gilt besonders für die Sekundärregelung, da sie sich auf einen längeren Zeithorizont bezieht als die schnelle Primärregelung (auch als Sekundenreserve bezeichnet).

Zur schnellen Mobilisierung zusätzlicher Leistung ist es weiter bekannt, dass die im Rotor steckende kinetische Energie genutzt wird. Dies geschieht dadurch, dass durch Hochsetzen des Generatormoments mehr elektrische Leistung erzeugt wird, als an sich unter den gegebenen Windbedingungen vom Rotor bereitgestellt wird. Damit kann zwar sehr schnell zusätzliche Leistung nahezu unabhängig von den aktuell herrschenden Windbedingungen mobilisiert werden, da jedoch hierzu eine absinkende Rotordrehzahl in Kauf genommen werden muss, kann dies nur über einen kurzen Zeitraum hinweg erfolgen. Der Einsatz dieses Verfahrens ist daher auf den Bereich der Primärregelung beschränkt.

Weiter ist es bekannt, die Windenergieanlagen nicht mit den von der Betriebssteuerung für den jeweiligen Betriebspunkt an sich bestimmten Werten, insbesondere für den Pitchwinkel, zu betreiben, sondern hier einen Sicherheitsabschlag vorzunehmen (Prillwitz, F. et al.: Primärregelung mit Windkraftanlagen, ETG-Workshop "Neue dezentrale Versorgungsstrukturen", 19. - 20.

Februar 2003, Frankfurt am Main). Für den Fall des Pitchwinkels heißt dies, dass mit einem um einen festen Betrag (Sicherheitsabschlag) reduzierten Pitchwinkel die Anlage betrieben wird. Da die Anlage damit nicht mit dem optimalen Pitchwinkel läuft, ergibt sich eine Leistungsreserve, die durch Verstellen des Pitchwinkels auf den optimalen Wert mobilisiert werden kann. Ein Nachteil des Verfahrens liegt darin, dass wegen der statischen Reduktion des Pitchwinkels um einen festen Betrag sich je nach Betriebspunkt der Anlage unterschiedliche Leistungsreserven ergeben. Während dies für die Primärregelung im Sekundenbereich noch akzeptabel sein kann (da sich der Betriebspunkt üblicherweise über wenige Sekunden hinweg nicht oder nur wenig ändert), ist solch ein Verhalten für die auf einen längeren Zeithorizont zielende Sekundärregelung deutlich nachteilig.

Ausgehend von dem zuletzt genannten Stand der Technik liegt der Erfindung die Aufgabe zugrunde, eine Windenergieanlage der eingangs genannten Art hinsichtlich der Bereitstellung von Regelleistung zu verbessern, und insbesondere Instabilitäten zu vermeiden.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem von einem Rotor angetriebenen Generator zur Erzeugung elektrischer Leistung und einer Steuerung, die ein Pitchmodul zur Veränderung eines Pitchwinkels von Blättern des Rotors aufweist, wobei die Steuerung einen Eingang für eine vorzuhaltende Leistungsreserve umfasst und in Abhängigkeit von einem Betriebspunkt der Windenergieanlage einen Soll-Pitchwinkel bestimmt, ist erfindungsgemäß ein Sekundärpitchregler vorgesehen, der einen Detektor für eine verfügbare Leistung und ein dynamisches Offset-Modul umfasst, wobei an das dynamische Offset-Modul Eingangssignale für die von dem Detektor bestimmte verfügbare Leistungsreserve, die geforderte Leistungsreserve und die erzeugte elektrische Leistung angelegt sind, und es dazu ausgebildet ist, einen Wert für einen Pitchwinkel-Offset zu bestimmen, und weiter ein Aufschaltungsglied vorgesehen ist, das den Soll-Pitchwinkel um den Pitchwinkel-Offset verändert.

Kern der Erfindung ist der Gedanke, einen Wert für die verfügbare Leistung zu bestimmen, und diesen - genauer gesagt den Unterschied zur tatsächlich erzeugten Leistung - für die Berechnung eines variablen Pitchwinkel-Offsets zu verwenden. Dank dieser Verknüpfung, insbesondere der Variabilität des Pitchwinkel-Offsets, kann der für die gewünschte Regelleistung erforderliche Offset unter Berücksichtigung des aktuellen Arbeitspunktes der Windenergieanlage bestimmt werden. Damit kann eine optimale Anpassung des Pitchwinkel-Offsets an die jeweiligen Betriebsbedingungen der Windenergieanlage erfolgen. Mit dieser optimierten Anpassung wird der inhärente Nachteil eines statischen Offsets, nämlich dass er unnötig groß gewählt werden muss, um für jede Betriebswahl ausreichend zu sein, sicher vermieden. Insgesamt ergibt sich damit eine optimale Ausnutzung der Leistung der Windenergieanlage.

Ein weiterer Vorteil der Erfindung liegt in der hohen Stabilität der Regelung. Überraschenderweise hat sich gezeigt, dass durch das Einwirken auf den Pitchwinkel, anstatt einer direkten Veränderung der angeforderten Sollleistung, die Regelung zwar nur noch indirekt erfolgt (nämlich über den Offset des Pitchwinkels), aber dadurch Messfehler und Messungenauigkeiten bei den Eingangssignalen (insbesondere durch unvermeidliches Messwertrauschen) sich in viel geringerem Umfang auswirken als bei der aus dem Stand der Technik bekannten direkten Leistungsvorgabe. Die Regelung der Leistungsreserve wird damit stabiler und, weil wegen des verringerten Einflusses des Rauschens die Stellaktivität des Pitchantriebs reduziert wird, auch schonender im Betrieb. Dennoch ist trotz dieser Indirektheit die Regelung hinreichend schnell. Dies gilt insbesondere für den Einsatz als Sekundärregelung, welche bisher für Windenergieanlagen sehr problematisch war. - Abschließend sei noch angemerkt, dass der erforderliche Zusatzaufwand gering ist. Die erforderlichen Regler und Detektoren können mit wenig Aufwand in die Betriebssteuerung implementiert werden, und dank der schonenden indirekten Regelung braucht der Stellantrieb für den Pitchwinkel nicht extra verstärkt zu werden.

Vorzugweise ist für den Detektor ein Windschätzmodul vorgesehen, welches dazu ausgelegt ist, auf Basis der geschätzten Windgeschwindigkeit die verfügbare Leistung mittels eines Modells zu bestimmen. Mit einer solchen modellbasierten Schätzung der Windgeschwindigkeit werden Ungenauigkeiten und Störungen, wie sie durch eine echte Messung mittels eines Anemometers eingetragen werden, vermieden. Überraschenderweise hat sich gezeigt, dass damit die gewonnenen Daten insbesondere dank ihres viel geringeren Rauschspektrums verglichen mit echten Messwerten eine für die Bestimmung der verfügbaren Leistung erheblich höhere Qualität aufweisen. Diesem Gedanken weiter folgend ist vorzugsweise ein Bestimmungsglied für die tatsächlich erzeugte Leistung so ausgebildet, dass es ebenfalls modellbasiert ist. Damit können dieselben Vorteile auch in Bezug auf die tatsächlich erzeugte Leistung realisiert werden. Gemäß einem weiteren Aspekt ist es besonders bevorzugt, wenn das gleiche Modell als Basis für beides, die Schätzung der verfügbaren Leistung wie auch für die tatsächlich erzeugte Leistung, dient. Dies bietet insbesondere den Vorteil, dass gewisse Modellfehler (die aufgrund der für das Modell erforderlichen Vereinfachungen nahezu unvermeidlich sind) sich teilweise wegheben. Es wird damit eine Art Gleichtaktunterdrückung erreicht, wodurch die gesamte Modellierung deutlich an Langzeitstabilität gewinnt. Dies ermöglicht es ferner, mit verhältnismäßig einfachen Modellen auszukommen, so dass die mit komplexen Modellen häufig auftretenden Schwierigkeiten, insbesondere Stabilitätsprobleme, vermieden werden können.

Als zweckmäßige Modellierung hat sich die Verwendung einer geschlossenen Formel erwiesen, wobei die Gesamtleistung bestimmt wird aus dem Gesamtwirkungsgrad, der Luftdichte, der Rotorkreisfläche, der Schnelllaufzahl und dem Pitchwinkel unter Berücksichtigung der dritten Potenz der geschätzten Windgeschwindigkeit. Eine solch geschlossene Formel ermöglicht eine genaue Berechnung ohne Rekursionen. Alternativ kann aber auch vorgesehen sein, eine Look-up-Table (LUT) vorzusehen. Dies bietet insbesondere den Vorzug einer hohen Verarbeitungsgeschwindigkeit.

Zweckmäßigerweise umfasst das dynamische Offset-Modul einen I-Regler. Dieser bietet den Vorzug einer hohen stationären Genauigkeit. Jedwedes Rauschen der Eingangssignale wird dank der Integration stark gedämpft, so dass der Stellantrieb für den Pitchwinkel entsprechend geschont wird. Dank des erfindungsgemäßen Konzepts der indirekten Steuerung über den Pitchwinkel ist ein solcher I-Regler auch hinreichend schnell, so dass kein P-Glied erforderlich ist. Allerdings soll nicht ausgeschlossen werden, den Regler mit einer zusätzlichen P-Komponente sowie D-Komponente zu versehen.

Bei einem Windpark mit mehreren Windenergieanlagen, von denen mindestens eine die erfindungsgemäße Bestimmung der Regelleistung aufweist, ist zweckmäßigerweise vorgesehen, dass diese Bestimmung durch den Parkmaster erfolgt. Dies hat den Vorteil der zentralen Verarbeitung, was insbesondere bei der Versorgung von mehreren Windenergieanlagen mit entsprechenden Werten für die Regelleistung von Vorteil ist. Zweckmäßigerweise ist dazu im Parkmaster ein Balance-Modul vorgesehen. Dies ist dazu ausgebildet, die insgesamt von dem Windpark angeforderte Regelleistung auf die einzelnen Windenergieanlagen zu verteilen. Vorzugsweise weist das Balance-Modul dazu eine Gewichtungseinheit auf, die dazu ausgebildet ist, den Anteil der jeweiligen Windenergieanlage anhand der Nennleistung der einzelnen Windenergieanlage vorzusehen.

Es kann aber auch vorgesehen sein, dass das Balance-Modul dazu ausgebildet ist, einzelne Windenergieanlagen des Windparks in einem Trudelbetrieb zu betreiben, und diese für die Regelleistung heranzuziehen. Unter Trudelbetrieb wird hierbei verstanden, dass eine Windenergieanlage zwar dreht, aber keine oder nur sehr wenig (eine Zehnerpotenz kleiner als die anderen) Wirkleistung erzeugt. Diese Windenergieanlagen werden dann für die Regelreserve herangezogen, da bei ihnen die tatsächlich abgerufene Leistung stark gesteigert werden kann. Dieses Konzept bietet insbesondere Vorzüge dann, wenn bei einem Windpark sehr unterschiedliche Windverhältnisse über den Park hinweg auftreten, so dass Windenergieanlagen in Schwachwindzonen gut für die Bereitstellung der Regelreserve genutzt werden können, und dabei Einbußen an tatsächlich erzeugter Wirkleistung im Normalbetrieb minimiert werden können. Zur Vergleichmäßigung der Belastung kann aber auch vorgesehen sein, dass die Verteilung der Regelleistung nach Verfügbarkeit der Anlagen erfolgt.

Die Erfindung wird nachfolgend unter Bezugnahme auf die beigefügte Zeichnung erläutert, in der ein vorteilhaftes Ausführungsbeispiel dargestellt ist. Es zeigen:

Fig. 1:   eine schematische Ansicht einer Windenergieanlage gemäß einem Ausführungsbeispiel der Erfindung;

Fig. 2:   eine Blockansicht, welche eine Einrichtung zur Pitchverstellung zeigt;

Fig. 3:   Diagramme, die den Verlauf des Pitchwinkels und der angeforderten und tatsächlich gelieferten Leistung zeigen;

Fig. 4:   einen Windpark mit mehreren Windenergieanlagen und einem Parkmaster gemäß der Erfindung; und

Fig. 5:   ein Blockdiagramm, welches eine Pitchverstellung gemäß dem Stand der Technik zeigt.

Eine Windenergieanlage 1 gemäß einem Ausführungsbeispiel der Erfindung umfasst einen Turm 10, auf dessen oberen Ende eine Gondel 11 in Aziumtrichtung verschwenkbar angeordnet ist. An einer Stirnseite der Gondel 11 ist ein Windrotor 2 drehbar angeordnet. Er treibt über eine Rotorwelle einen Generator 13 an, der die von dem Rotor 2 gelieferte mechanische Leistung in elektrische Leistung umwandelt. Der Generator 13 ist in dem dargestellten Ausführungsbeispiel als doppelt gespeiste Asynchronmaschine ausgebildet, die über einen Stator direkt an eine Anschlussleitung 15 und mit ihrem Rotor über einen Umrichter 14 indirekt an die Anschlussleitung 15 angeschlossen ist. Die Anschlussleitung 15 führt zu einem Anlagentransformator 16, der vorzugsweise im Bereich des Fußes des Turms 10 angeordnet ist. Der Anlagentransformator 16 ist an ein Energieübertragungsnetz angeschlossen, wobei es sich meistens um ein internes Netz eines Windparks handelt. In der Gondel 11 ist weiter eine Betriebssteuerung 3 angeordnet. Sie ist dazu ausgebildet, den gesamten Betrieb der Windenergieanlage zu überwachen und zu steuern. Sie umfasst ein Pitchmodul 31, welches dazu ausgebildet ist, einen Anstellwinkel (Pitchwinkel Θ) von Rotorblättern 21 des Windrotors 2 zu kontrollieren. Das Pitchmodul 31 wirkt dazu mit einem Pitchsystem 22 zusammen, welches in der Nabe des Windrotors 2 angeordnet ist. Es umfasst eine Regeleinrichtung zur Einstellung des von dem Pitchmodul 31 vorgegebenen Pitchwinkels mittels eines Pitchantriebs (nicht dargestellt), welcher den Pitchwinkel θ der Rotorblätter 21 verändert.

Die Betriebssteuerung 3 mit dem Pitchmodul 31 ist dazu ausgebildet, dass sie den Pitchwinkel θ jeweils so einstellt, dass sich ein optimaler Wert für die sogenannte Schnelllaufzahl λ (Verhältnis von Blattspitzengeschwindigkeit zu Windgeschwindigkeit) einstellt.

Damit kann ein maximaler Energieertrag des Windrotors 2 bei den jeweiligen Windbedingungen erreicht werden. Den Wert für die optimale Schnelllaufzahl $\lambda_{opt}$ stellt die Betriebssteuerung 3 als Parameter für das Pitchmodul 31 zur Verfügung.

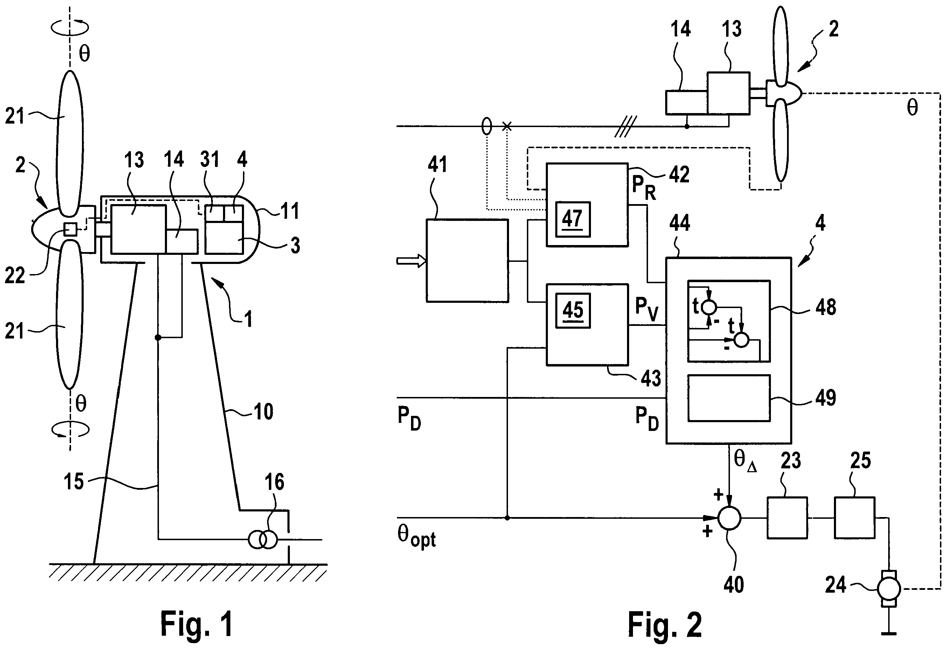

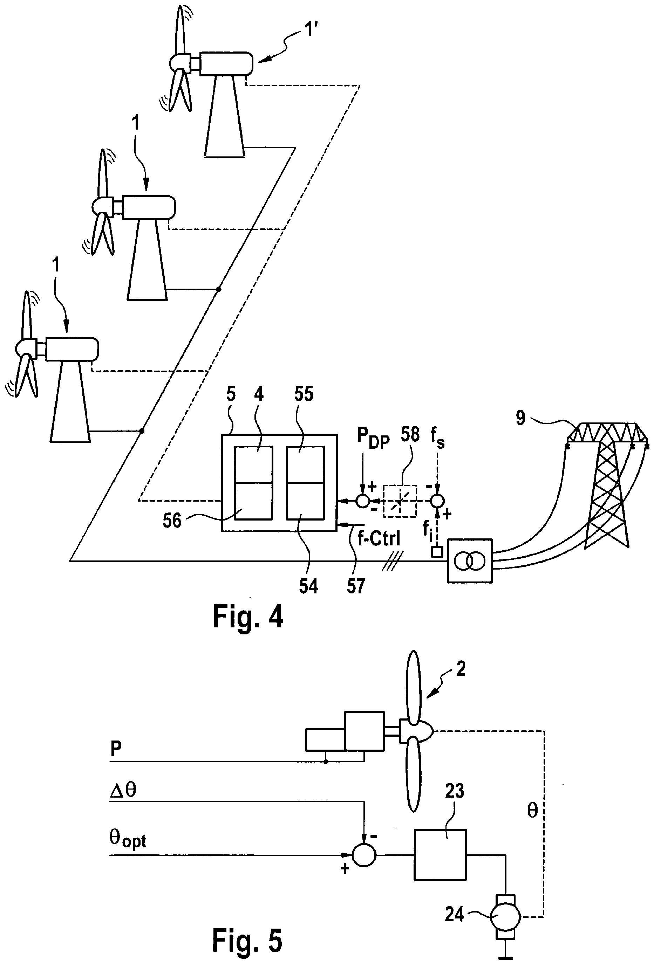

Aufbau und Funktionsweise der Steuerung 3 mit dem Pitchmodul 31 werden nachfolgend anhand der schematischen Darstellung in Fig. 2 näher erläutert. Die Betriebssteuerung 3 bestimmt aus der Schnelllaufzahl $\lambda$ denjenigen Wert für den Pitchwinkel $\theta_{opt}$, der unterhalb der Nennwindgeschwindigkeit zu einem Betrieb des Windrotors 2 mit der optimalen Schnelllaufzahl $\lambda_{opt}$ führt; oberhalb der Nennwindgeschwindigkeit bestimmt die Betriebssteuerung den Pitchwinkel $\theta_{opt}$, der zur Einhaltung des zulässigen Drehzahlbereichs führt. Dieser optimale Pitchwinkel $\theta_{opt}$ wird ausgegeben und an einen Eingang des Pitchsystems 22 des Windrotors 2 gegeben, genauer gesagt an einen Pitchregler 23 des Pitchsystems 22. Der Pitchregler 23 steuert einen Stellmotor 24 des Pitchsystems 22 an, welcher den Anstellwinkel $\theta$ der Rotorblätter 21 verändert. Dieser an sich bekannte Wirkmechanismus ist im Stand der Technik (s. Fig. 5) noch darum erweitert worden, dass die Sollvorgabe $\Theta_{opt}$ für den optimalen Pitchwinkel verändert wird um eine Pitchwinkelabweichung $\Delta\Theta$, die vorgebbar ist und auf den berechneten Wert für einen optimalen Pitchwinkel aufgeschaltet wird. Mit einer solchen statischen Vorgabe für die Abweichung $\Delta\Theta$ des Pitchwinkels kann ein Betrieb der Windenergieanlage im suboptimalen Bereich erreicht werden, wie er einleitend bei einer Diskussion zum Stand der Technik erläutert wurde und der Übersichtlichkeit halber in Fig. 5 schematisch dargestellt ist.

Das Grundkonzept mit der Vorgabe des optimalen Pitchwinkels an den Pitchregler 23, der wiederum über einen Stellantrieb 24 die Rotorblätter 21 verstellt, ist in das Ausführungsbeispiel der Erfindung wie in Fig. 2 dargestellt übernommen. Die Bestimmung eines Offsets für den Pitchwinkel erfolgt aber auf vollständig andere Weise, die nachfolgend näher erläutert wird. Der in seiner Gesamtheit mit der Bezugsziffer 4 bezeichnete dynamische Sekündärpitchregler umfasst ein Windschätzmodul 41, ein Bestimmungsglied für die erzeugte elektrische Leistung 42, einen Detektor für eine verfügbare elektrische Leistung 43 und einen Sekundärcontroller 44. Das Windschätzmodul 41 ist dazu ausgebildet, aus in der Betriebssteuerung 3 vorhandenen Daten einen Schätzwert für die gegenwärtig herrschende Windstärke zu berechnen. Eine Besonderheit des Windschätzmoduls 41 liegt darin, dass es keine eigenständigen Sensoren benötigt, sondern allein mit ohnehin in der Betriebssteuerung 3 vorhandenen Messdaten (also zusagen passiv) betrieben werden kann. Der von dem Windschätzmodul 41 bestimmte Wert für die geschätzte Windgeschwindigkeit $v_E$ wird an den Detektor 43 für die verfügbare Leistung als eine Eingangsgröße angelegt. Als eine weitere Eingangsgröße an den Detektor 43 ist der von der Betriebssteuerung zur Verfügung gestellte Wert für einen optimalen Pitchwinkel $\theta_{opt}$ angelegt. Der Detektor 43 berechnet daraus die theoretisch verfügbare elektrische Leistung, welche bei optimaler Einstellung über den Windrotor 2 bei gegenwärtig herrschenden Windbedingungen aus dem Wind entnommen wird und über das Generator/Umrichtersystem 13, 14 abgegeben werden könnte. Zur Berechnung des Werts für die verfügbare Leistung $P_V$ weist der Detektor 43 vorzugsweise ein Modell 45 für die Windenergieanlage auf. Das Modell 45 ist vorzugsweise ein vereinfachtes nicht lineares Modell. Dies ermöglicht eine sowohl genaue wie auch schnelle, weil unmittelbare und damit stabile Bestimmung der verfügbaren Leistung. Hierbei wird die verfügbare Leistung bestimmt nach der Formel

$$P_V = \frac{\eta\rho A}{2} c_{P(\lambda,\Theta_{Opt})} v_E^3 \quad,$$

wobei $\eta$ für den Gesamtwirkungsgrad, $\rho$ für die Luftdichte, A für die Rotorkreisfläche, $\lambda$ für die Schnelllaufzahl und $\theta_{opt}$ für den optimalen Blatteinstellwinkel stehen, und der Wert $v_E$ für die geschätzte Windgeschwindigkeit als Eingangsparameter des Modells 45 steht. Basierend auf einem solchen modellgestützten Schätzwert berechnet der Detektor 43 einen Wert für die verfügbare Leistung $P_v$ und gibt diesen an seinem Ausgang aus und legt ihn an einen Eingang des Sekundärcontrollers 44 an.

Mittels des Bestimmungsmoduls für die tatsächlich erzeugte Leistung 42 wird die Leistung bestimmt, welche von dem Generator/Rotorsystem 13, 14 tatsächlich erzeugt und abgegeben wird. Im einfachsten Fall sind dazu Sensoren für Spannung und Strom 17, 18 an der Anschlussleitung 15 angeordnet, und deren Werte an das Bestimmungsglied 42 angeschlossen. Das Bestimmungsglied 42 führt eine Multiplikation durch und bestimmt daraus die tatsächlich erzeugte Leistung aus $P_R$. Dieser einfache Fall unter Verwendung der Sensoren 17, 18 ist in Fig. 2 mit gepunkteten Linien dargestellt.

Bei einer bevorzugten Ausführungsform der Erfindung kann die Bestimmung der tatsächlich erzeugten Leistung $P_R$ durch Bezugnahme auf den von dem Windschätzmodul 41 bereitgestellten Wert für die geschätzte Windgeschwindigkeit $v_E$ durchgeführt werden. Dazu weist das Bestimmungsglied für die tatsächlich erzeugte Leistung 42 ebenfalls ein Modell 47 der Windenergieanlage auf. Vorzugsweise ist das Modell 47 entsprechend dem Modell 45 für den Detektor 43 ausgebildet. Weiter ist an das Bestimmungsglied 42 vom Pitchsystem 22 ein Wert für den tatsächlich eingestellten Pitchwinkel $\theta_R$ angelegt (siehe gestrichelte Linien in Fig. 2). Aus diesen Werten wird mittels des Modells gemäß der nachfolgenden Beziehung

$$P_R = \frac{\eta\rho A}{2} c_{P(\lambda,\Theta_R)} v_E^3$$

die tatsächlich erzeugt Leistung $P_R$ bestimmt, wobei $P_R$

die tatsächlich erzeugte Leistung ist und $\theta_R$ der tatsächlich eingestellte Blattwinkel ist. Es ist auch möglich, die tatsächlich erzeugten Leistung $P_R$ anhand von Sensoren oder Daten aus der Betriebssteuerung 3 zu bestimmen.

Die somit bestimmte tatsächlich abgegebene Leistung $P_R$ wird über den Ausgang des Bestimmungsglieds 42 an einen Eingang des Sekundärcontrollers 44 angelegt. An einen weiteren Eingang des Sekundärcontrollers 44 ist ein Wert für den Betrag der vorzuhaltenden Leistungsreserve $P_D$ angelegt. Der Sekundärcontroller 44 weist in dem dargestellten Ausführungsbeispiel einen Vorfilter 48 und einen Regelkern 49 auf. Dem Vorfilter 48 sind als Eingangssignale die beiden Werte für die tatsächlich erzeugte Leistung $P_R$ und die verfügbare Leistung $P_v$ zugeführt. Es bestimmt daraus einen Differenzwert für den Leistungsüberschuss $P_B$, und vergleicht diesen mit dem angelegten Wert für die angeforderte Reserveleistung $P_D$. Daraus bestimmt das Vorfilter als Ausgangssignal einen Wert für eine Leistungsabweichung $P_\Delta$. Der Wert wird als Eingangsgröße für das Vorfilter 48 an den eigentlichen Regelkern angelegt. Der Regelkern ist dazu ausgebildet, aus diesem Wert einen Wert für einen Pitchfehlerwinkel $\Theta_\Delta$ zu bestimmen. Dieser Wert wird von dem Sekundärcontroller 44 ausgegeben und über ein Summationsglied 40 vorzeichenrichtig auf den von der Betriebssteuerung gelieferten Wert für den optimalen Pitchwinkel $\theta_{opt}$ hinzugefügt. Dadurch entsteht ein modifizierter Wert für den angeforderten Pitchwinkel, welcher als Eingangswert an den an sich bekannten Pitchregler 23 angelegt wird.

Damit wird erreicht, dass aus den von dem Bestimmungsgliedern anhand der geschätzten Windgeschwindigkeit bestimmten Werten für die verfügbare Leistung und die tatsächlich erzeugte Leistung als Differenz eine tatsächlich zur Verfügung stehende Reserveleistung berechnet werden kann, die verglichen wird gegen die (bspw. vom Netzbetreiber) angeforderte Leistungsreserve. Ergibt sich hier eine Abweichung, so erzeugt der Regelkern 49 des Sekundärcontrollers 44 einen Zusatzpitchwinkel $\Theta_\Delta$, der zu dem von der Betriebssteuerung gelieferten optimalen Pitchwinkel $\theta_{opt}$ hinzugefügt wird. Mit dem Stellantrieb 24 des Pitchsystems 22 wird dieser neue Einstellwinkel eingestellt, wodurch sich die tatsächlich erzeugte Leistung entsprechend verändert. Die Regelschleife ist damit geschlossen.

Es hat sich bewährt, den im Regelkern 49 des Sekundärcontrollers 44 enthaltenen Regler vorzugsweise als einen reinen Integralregler auszuführen. Damit ergibt sich eine sehr gute stationäre Genauigkeit, wobei sich überraschenderweise gezeigt hat, dass die damit erreichbare Geschwindigkeit auch ausreichend groß ist. Die Erfindung hat erkannt, dass trotz der Verwendung eines reinen Integralreglers die Stabilität auch gewahrt wird, da dank der Verwendung eines Schätzwerts für die Windgeschwindigkeit die Bestimmungsglieder für die tatsächlich erzeugte und verfügbare Leistung soweit von ansonsten unvermeidlichem Messrauschen entkoppelt sind, dass der Integralregler ohne Gefahr bei Stabilitätsverlust verwendet werden kann. Es sei angemerkt, dass der Regler auch auf andere Weise ausgeführt sein kann, bspw. als PI oder PID-Regler oder auch als Zustandsregler.

Der Vollständigkeit halber sei noch weiter angemerkt, dass das Signal für die geforderte Leistungsreserve $P_D$ weiter in die Betriebssteuerung eingespeist wird, um dort den Leistungssollwert um jenen Wert zu reduzieren. Dies ist an sich bekannt und braucht daher nicht weiter erläutert zu werden.

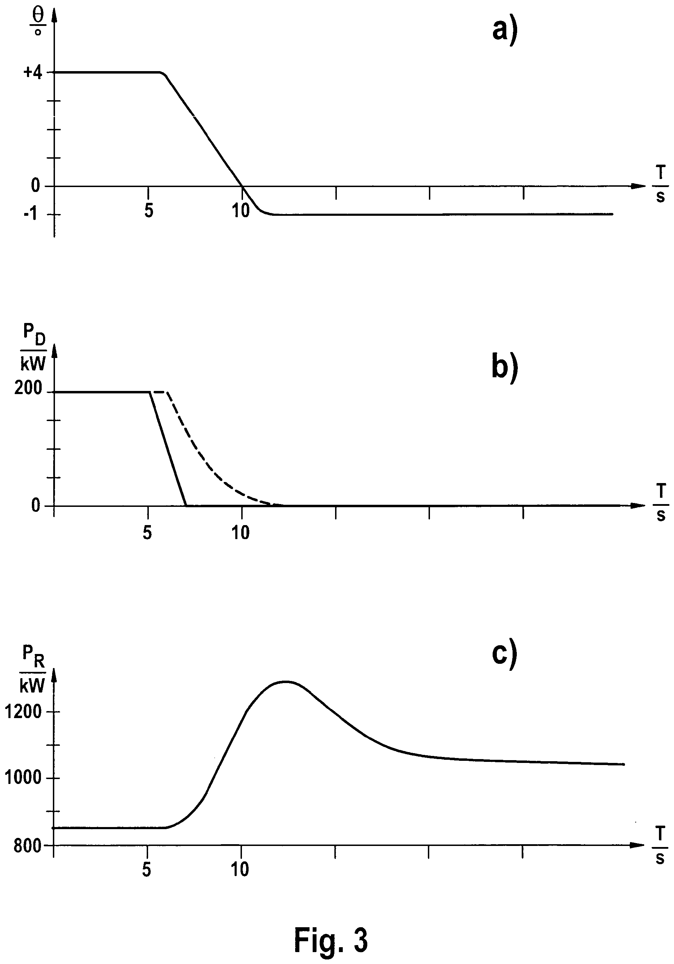

Die Wirkung der Erfindung sei nachfolgend unter Bezugnahme auf Fig. 3 erläutert. Die Figur stellt eine Simulation eines Leistungsverlaufs bei einer schnellen Reduzierung der geforderten Leistungsreserve dar. Fig. 3a zeigt den Pitchwinkel $\theta$, Fig. 3b zeigt mit einer durchgezogenen Linie die geforderte Leistungsreserve und mit der gestrichelten Linie die tatsächlich vorhandene Leistungsreserve, sowie Fig. 3c zeigt die tatsächlich erzeugte elektrische Leistung $P_R$. Es sei angenommen, dass zum Zeitpunkt T=5 ms die geforderte Leistungsreserve von 200 kW zurückgenommen werde auf 0 kW. Als Rahmenbedingungen liegt eine Windenergieanlage mit einer Nennleistung von 2000 kW, die bei einer Windgeschwindigkeit von 9 ms im Teillastbetrieb eine Leistung von etwa 850 kW erzeugt, zu Grunde. Bei diesen Bedingungen ergibt sich ein optimaler Betrieb, wenn der Pitchwinkel $\Theta$ einen Wert von -1° aufweist.

Zu Beginn beträgt die geforderte Leistungsreserve 200 kW. Um sie zur Verfügung zu stellen, ist für den Einstellwinkel $\Theta$ der Rotorblätter 21 nicht der optimale Winkel -1° gewählt, sondern ein Winkel von +4°. Damit werden bei den genannten Bedingungen etwa 850 kW elektrische Leistung tatsächlich erzeugt. Mit der Rücknahme der geforderten Leistungsreserve auf 0 kW beginnend mit dem Zeitpunkt T=5 ms wird der Blatteinstellwinkel $\Theta$ mit maximaler Geschwindigkeit (1°/sek) des Stellantriebs 24 zurückgestellt, bis schließlich der optimale Pitchwinkel $\theta_{opt}$ von -1° erreicht ist. Wegen der endlichen Pitchverstellgeschwindigkeit steht noch für eine gewisse Zeit (etwa 3 s) eine Reserveleistung zur Verfügung, ohne dass diese angefordert wird (siehe gestrichelte Linie in Fig. 3b). Die tatsächlich erzeugte Leistung steigt bei dem Betätigen des Pitchantriebs 24 kontinuierlich an, bis sie beim Erreichen des optimalen Pitchwinkels ein Maximum von 1200 kW erreicht und sich danach auf einen Wert von etwa 1050 kW eingependelt hat. Anhand der Differenz zwischen etwa 1050 kW und dem Startwert 850 kW lässt sich ersehen, dass von der Windenergieanlage tatsächlich die ursprünglich geforderte Leistungsreserve von 200 kW bereitgestellt wurde. Das in Figur 3c gezeigte Überfahren eines Leistungsmaximum kann durch ein Leistungsgradienten-Begrenzungsmodul 25 in der Regelung vermieden werden, das die Pitchverstellgeschwindigkeit in Abhängigkeit der gemessenen oder geschätzten Geschwindigkeit des Leistungsanstiegs begrenzt. Dadurch kann erreicht werden, dass keine überhöhte Leistung in das Netz eingespeist wird und jede Gefahr einer Destabilisierung des Netzes durch Einschwingvorgänge vermieden wird.

Man erkennt an den Diagrammen, dass die Regelung in Bezug auf den Pitchwinkel sehr harmonisch verläuft und frei ist von Überschwingern und von andauernden, Materialverschleiß bedeutenden Betätigungen. Insbesondere kommt es nicht zu Instabilitäten. Die Erfindung bietet damit den Vorteil, dass mit verhältnismäßig einfachen Mitteln und insbesondere ohne das Erfordernis zusätzlicher Hardware eine Leistungsreserve gemäß den Anforderungen bereitgestellt werden kann. Die Windenergieanlage kann damit im Netzverbund im Rahmen von Systemdienstleistungen, insbesondere der Sekundärregelung, herangezogen werden. Die erfindungsgemäße Lösung ist einfach und kann dezentral an der Windenergieanlage erfolgen, wobei lediglich ein einfaches Stellsignal von einer Netzleitstelle oder vom Parkmaster erforderlich ist. Wie man aus der Darstellung in Fig. 3c ersehen kann, kann die geforderte Leistungsreserve recht genau eingehalten werden, und das erfindungsgemäß dank der beiden Bestimmungsglieder in allen Betriebspunkten. Weiter zeigt die erfindungsgemäße Regelung keine Neigung zur Instabilität. Dies ist nicht nur für das Betriebsverhalten der Anlage von Vorteil, sondern schont auch den Pitchverstellantrieb 24, so dass er nicht verstärkt zu werden braucht.

Bei der in Fig. 4 dargestellten Ausführungsform ist die Erfindung am Beispiel eines Windparks gezeigt. Er besteht aus mehreren Windenergieanlagen 1, 1', die über ein internes Versorgungsnetz 51 miteinander verbunden und an das öffentliche Netz 9 angeschlossen sind. Weiter umfasst der Windpark einen Parkmaster 5, der Leitfunktion für die Windenergieanlagen 1, 1' mit ihren Betriebssteuerungen ausübt und mit diesen über ein Signalnetzwerk 52 verbunden ist. Der Parkmaster 5 enthält in diesem Ausführungsbeispiel den Sekundärcontroller 4 für die einzelnen Windenergieanlagen 1, 1' des Windparks. Weiter umfasst der Parkmaster 5 ein Balancemodul 54, das dazu ausgebildet ist, eine vom Netzbetreiber angeforderte Reserveleistung $P_{DP}$ auf die einzelnen Windenergieanlagen 1, 1' aufzuteilen. Die entsprechenden Ausgabewerte für die einzelnen Werte sind an die Sekundärcontroller 4 für die einzelnen Windenergieanlagen 1 angeschlossen. Das Balancemodul 54 kann mit einem Gewichtungsmodul 55 zusammenwirken, das dazu ausgebildet ist, vorzugsweise solche Windenergieanlagen 1, 1' für die Bereitstellung der Reserveleistung heranzuziehen, die zu der Zeit nur wenig Leistung produzieren und daher noch Reserve aufweisen. Weiter kann ein Trudelmodul 56 vorgesehen sein, welches bestimmte Windenergieanlagen 1', die nur ein Zehntel oder weniger der durchschnittlichen Leistung der übrigen Windenergieanlagen produzieren, bevorzugt für die Bereitstellung der Regelleistung heranzieht.

Der Parkmaster 5 kann zusätzlich noch ein Statikmodul 58 sowie einen Signaleingang 57 umfassen. Sofern am Signaleingang ein Signal zur Frequenzregelung f-Ctrl anliegt, wird eine vorgebbare Reserveleistung $P_{DP}$ für die Windenergieanlagen aktiviert. Im Statikmodul 58 ist eine Funktion hinterlegt mit welchen Leistungsreduktionen bzw. -erhöhungen der Windpark auf Abweichungen der Ist-Frequenz $f_i$ von der Soll-Frequenz $f_s$ reagieren soll und die Leistungsvorgabe und/oder die Vorgabe der Reserveleistung entsprechend der Funktion an den Windenergieanlagen 1 modifiziert werden.

**Patentansprüche**

1.  Windenergieanlage mit einem von einem Rotor angetriebenen Generator zur Erzeugung elektrischer Leistung und einer Steuerung (3), die ein Pitchmodul (31) zur Verstellung eines Pitchwinkels von Blättern (21) des Rotors (2) aufweist und wobei die Steuerung (3) einen Eingang für eine geforderte Leistungsreserve aufweist und in Abhängigkeit von einem Betriebspunkt der Windenergieanlage einen Soll-Pitchwinkel bestimmt, und ferner ein Sekundärpitchregler vorgesehen ist, der ein dynamisches Offset-Modul umfasst und dazu ausgebildet ist einen Wert für einen Pitchwinkel-Offset zu bestimmen, und die Steuerung mit einem Aufschaltungsglied (40) vorgesehen ist, das den Soll-Pitchwinkel um einen Pitchwinkel-Offset verändert, **dadurch gekennzeichnet, dass** der Sekundärpitchregler einen Detektor (43) für eine verfügbare Leistung umfasst, und dass an das dynamische Offset-Modul Eingangssignale für die von dem Detektor bestimmte verfügbare Leistung, die geforderte Leistungsreserve und die erzeugte elektrische Leistung angelegt sind.

2.  Windenergieanlage nach Anspruch 1,
    **dadurch gekennzeichnet, dass**
    der Detektor (43) ein Windschätzmodul (41) aufweist und dazu ausgebildet ist, auf Basis der geschätzten Windgeschwindigkeit die verfügbare Leistung mittels eines Modells zu bestimmen.

3.  Windenergieanlage nach Anspruch 2,
    **dadurch gekennzeichnet, dass**
    ein Bestimmungsglied (42) für die erzeugte elektrische Leistung vorgesehen ist, das auf einem Modell basiert.

4.  Windenergieanlage nach Anspruch 3,
    **dadurch gekennzeichnet, dass**
    das Bestimmungsglied (42) auf demselben Modell wie der Detektor (43) basiert.

5.  Windenergieanlage nach einem der Ansprüche 2 bis 4,
    **dadurch gekennzeichnet, dass**
    das Modell formelbasiert ist.

6.  Windenergieanlage nach einem der vorangehenden Ansprüche,
    **dadurch gekennzeichnet, dass**

das dynamische Offset-Modul (44) einen I-Regler aufweist.

**7.** Windenergieanlage nach Anspruch 6, **dadurch gekennzeichnet, dass** das dynamische Offset-Modul (44) einen Ausgang aufweist, an dem die Regelleistung ausgekoppelt und als Korrektursignal an die Betriebssteuerung (3) angelegt ist.

**8.** Windpark mit mehreren Windenergieanlagen nach Anspruch 1, **dadurch gekennzeichnet, dass** ein Balance-Modul (54), welches eine Verteilung der Regelleistung auf die Windenergieanlagen anhand ihrer Nennleistung vornimmt, an einem Parkmaster (5) angeordnet ist, an den die Windenergieanlage angeschlossen ist.

**9.** Windpark nach Anspruch 8, **dadurch gekennzeichnet, dass** das Balance-Modul (54) dazu ausgebildet ist, einige der Windenergieanlagen (1') des Windparks im Trudelbetrieb zu fahren, und diese bevorzugt für die Regelleistung heranzuziehen.

**10.** Windpark nach Anspruch 8 oder 9, **dadurch gekennzeichnet, dass** am Parkmaster (5) weiter das dynamische Offset-Modul (44) vorgesehen ist.

**11.** Windpark nach einem der Ansprüche 8 bis 10, **dadurch gekennzeichnet, dass** das Balance-Modul (54) mit einem Gewichtungsmodul (55) zusammenwirkt, das dazu ausgebildet ist, die Regelleistung nach Verfügbarkeit der Windenergieanlagen aufzuteilen.

**12.** Windpark nach einem der Ansprüche 8 bis 11, **dadurch gekennzeichnet, dass** ein Statikmodul (58) vorgesehen ist, welches in Abhängigkeit von einer Abweichung einer Ist-Netzfrequenz von einer Soll-Netzfrequenz die Regelleistung erhöht oder erniedrigt.

**Claims**

**1.** Wind energy installation having a generator, which is driven by a rotor, for producing electrical power and having a controller (3) which has a pitch module (31) for adjusting a pitch angle of blades (21) of the rotor (2), and with the controller (3) having an input for a required power reserve and determining a nominal pitch angle as a function of an operating point of the wind energy installation, and furthermore a secondary pitch regulator is provided, which comprises a dynamic offset module and is designed to determine a value for a pitch angle offset, and the controller is provided with an activation element (40) which varies the nominal pitch angle by a pitch angle offset, **characterized in that** the secondary pitch regulator comprises a detector (43) for an available power, and **in that** input signals for the available power, which is determined by the detector, the required power reserve and the electrical power produced are applied to the dynamic offset module.

**2.** Wind energy installation according to Claim 1, **characterized in that** the detector (43) has a wind estimation module (41) and is designed to determine the available power by means of a model on the basis of the estimated wind speed.

**3.** Wind energy installation according to Claim 2, **characterized in that** a determination element (42) is provided for the electrical power produced, and is based on a model.

**4.** Wind energy installation according to Claim 3, **characterized in that** the determination element (42) is based on the same model as the detector (43).

**5.** Wind energy installation according to one of Claims 2 to 4, **characterized in that** the model is formula-based.

**6.** Wind energy installation according to one of the preceding claims, **characterized in that** the dynamic offset module (44) has an I regulator.

**7.** Wind energy installation according to Claim 6, **characterized in that** the dynamic offset module (44) has an output at which the regulation power is output and is applied as a correction signal to the operation controller (3).

**8.** Wind farm having a plurality of wind energy installations according to Claim 1, **characterized in that** a balance module (54), which distributes the regulation power between the wind energy installations on the basis of their rating, is arranged at a farm master (5), to which the wind energy installation is connected.

**9.** Wind farm according to Claim 8, **characterized in that** the balance module (54) is designed to operate some of the wind energy installations (1') in the wind farm in the coasting mode, and preferably to use these for the regulation power.

10. Wind farm according to Claim 8 or 9,
**characterized in that**
the dynamic offset module (44) is also provided at the farm master (5).

11. Wind farm according to one of Claims 8 to 10,
**characterized in that**
the balance module (54) interacts with a weighting module (55), which is designed to split the regulation power on the basis of the availability of the wind energy installations.

12. Wind farm according to one of Claims 8 to 11,
**characterized in that**
a static module (56) is provided, which increases or decreases the regulation power as a function of a discrepancy between an actual grid frequency and a nominal grid frequency.

**Revendications**

1. Éolienne avec un générateur entraîné par un rotor pour la génération d'une puissance électrique et un dispositif de commande (3), qui comprend un module de pas (31) pour le réglage d'un angle de pas de pales (21) du rotor (2) et le dispositif de commande (3) comprenant une entrée pour une réserve de puissance exigée et déterminant, en fonction d'un point de fonctionnement de l'éolienne, un angle de pas de consigne, et en outre un régulateur secondaire de pas est prévu, qui comprend un module d'offset dynamique et est conçu pour déterminer une valeur pour un offset d'angle de pas, et le dispositif de commande est muni d'un organe de mise en ligne (40) qui modifie l'angle de pas de consigne d'un offset d'angle de pas,
**caractérisée en ce que**
le régulateur secondaire de pas comprend un détecteur (43) pour une puissance disponible et **en ce que**, au niveau du module d'offset dynamique, des signaux d'entrée pour la puissance disponible déterminée par le détecteur, la réserve de puissance exigée et la puissance électrique générée, sont appliqués.

2. Éolienne selon la revendication 1,
**caractérisée en ce que**
le détecteur (43) comprend un module d'estimation du vent (41) et est conçu pour déterminer, sur la base de la vitesse du vent estimée, la puissance disponible au moyen d'un modèle.

3. Éolienne selon la revendication 2,
**caractérisée en ce que**

un organe de détermination (42), basé sur un modèle, est prévu pour la puissance électrique générée.

4. Éolienne selon la revendication 3,
**caractérisée en ce que**
l'organe de détermination (42) est basé sur le même modèle que le détecteur (43).

5. Éolienne selon l'une des revendications 2 à 4,
**caractérisée en ce que**
le modèle est basée sur une formule.

6. Éolienne selon l'une des revendications précédentes,
**caractérisée en ce que**
le module d'offset dynamique (44) comprend un régulateur I.

7. Éolienne selon la revendication 6,
**caractérisée en ce que**
le module d'offset dynamique (44) comprend une sortie au niveau de laquelle la puissance de régulation est découplée et qui est appliquée en tant que signal de correction au dispositif de commande (3).

8. Parc éolien avec plusieurs éoliennes selon la revendication 1,
**caractérisée en ce que**
un module d'équilibrage (54), qui effectue une répartition de la puissance de régulation sur les éoliennes à l'aide de leur puissance nominale, est disposé sur un maître de parc (5) auquel est raccordé l'éolienne.

9. Parc éolien selon la revendication 8,
**caractérisée en ce que**
le module d'équilibrage (54) est conçu pour piloter certaines des éoliennes (1') du parc éolien en mode vrille et pour utiliser celles-ci de préférence pour la puissance de régulation.

10. Parc éolien selon la revendication 8 ou 9,
**caractérisée en ce que**
le module d'offset dynamique (44) est en outre prévu sur le maître de parc (5).

11. Parc éolien selon l'une des revendications 8 à 10,
**caractérisée en ce que**
le module d'équilibrage (54) interagit avec un module de pondération (55) qui est conçu pour répartir la puissance de régulation selon la disponibilité des éoliennes.

12. Parc éolien selon l'une des revendications 8 à 11,
**caractérisée en ce que**
un module statique (58) est prévu, qui augmente ou diminue la puissance de régulation en fonction d'un écart entre une fréquence de réseau réelle et une

**EP 2 464 862 B1**

fréquence de réseau de consigne.

**Fig. 1**

**Fig. 2**

EP 2 464 862 B1

Fig. 3

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022974 A1

- DE 102007036446 A1